# FASCICULE DE BREVET EUROPEEN

(11) **EP 3 502 820 B1**
(45) Date de publication et mention de la délivrance du brevet: **22.04.2020**
(21) Numéro de dépôt: 18212132.7
(22) Date de dépôt: 13.12.2018
(51) Int. Cl.: G05D 1/00, B64D 43/00, G05D 1/10

(54) **PROCÉDÉ ET SYSTÈME AUTOMATIQUE D'AIDE AU PILOTAGE D'UN AÉRONEF**
VERFAHREN UND AUTOMATISCHES PILOTENASSISTENZSYSTEM EINES LUFTFAHRZEUGS
METHOD AND AUTOMATIC SYSTEM TO ASSIST WITH PILOTING AN AIRCRAFT

(30) Priorité: 21.12.2017 FR 1762839
(43) Date de publication de la demande: 26.06.2019
(73) Titulaire: Airbus Operations S.A.S., 31060 Toulouse (FR)
(72) Inventeur: LANTERNA, Florent, 31700 BEAUZELLE (FR); BARBA, Matthieu, 31880 LA SALVETAT (FR); SEMAT, Maxime, 31200 TOULOUSE (FR); BOURRET, Thierry, 31200 TOULOUSE (FR); SAUVE, Didier, 31700 BLAGNAC (FR)
(74) Mandataire: Sarraméa, Claude

(56) Documents cités:
- US-A- 6 085 127
- US-A1- 2011 290 947
- US-B1- 9 128 109

## Description

### DOMAINE TECHNIQUE

La présente invention concerne un procédé et un système automatiques d'aide au pilotage d'un aéronef pour commander au moins un pilote automatique et éventuellement un système de régulation de la poussée de l'aéronef.

### ÉTAT DE LA TECHNIQUE

Dans le cadre de la présente description, un pilote automatique correspond :
- soit à un système de pilotage automatique qui agit automatiquement sur des gouvernes de l'aéronef pour assurer son guidage,
- soit à un directeur de vol qui affiche automatiquement des informations sur un écran du poste de pilotage de l'aéronef afin d'apporter une aide au pilotage manuel réalisé par le pilote de l'aéronef.

On sait que le pilote automatique d'un aéronef, lorsqu'il est couplé ou non à un dispositif de régulation de la poussée, utilise une information de vitesse dans le but de maintenir une sélection du pilote et/ou le domaine de vitesse à des valeurs acceptables pour l'aéronef. Si au cours du pilotage, cette information de vitesse est perdue, c'est-à-dire si elle devient indisponible, erronée, ou non fiable, le pilote automatique et/ou le dispositif de régulation de la poussée se désengagent automatiquement en maintenant l'état courant de l'aéronef (attitude et poussée courantes), et rendent la main à l'équipage. Une telle situation peut se présenter, en particulier, en cas de mode commun de pannes dues, par exemple, à des conditions environnementales sévères ou dégradées. Cette situation est toutefois exceptionnelle, car la plupart des aéronefs sont équipés de systèmes permettant de limiter les effets desdites conditions environnementales, de façon à améliorer la disponibilité de l'information de vitesse. Un désengagement du pilote automatique et/ou du dispositif de régulation de la poussée induit une charge de travail supplémentaire pour l'équipage qui doit traiter la cause de la panne en plus des tâches habituelles, et ceci dans une situation inhabituelle dans laquelle l'information de vitesse est perdue. L'information de vitesse est un paramètre primaire, utilisé par le système de pilotage automatique ou le directeur de vol, pour définir le domaine de vol de l'aéronef (limites haute et basse) et la dynamique de l'aéronef. Un pilote automatique ou un dispositif de régulation de la poussée qui ne respecterait pas ces limites de vitesse pourraient amener l'aéronef à sortir de son domaine de vol. Pour cette raison, le pilote automatique et le dispositif de régulation de la poussée sont munis de différents moyens usuels qui protègent le domaine de vitesse.

Le document FR 2 960 659 A1 propose une solution qui ne donne pas entière satisfaction. En effet, elle induit des limitations de capacités opérationnelles du pilote automatique ce qui augmente la charge de travail de l'équipage.

### EXPOSÉ DE L'INVENTION

La présente invention a pour objet de pallier ces inconvénients en proposant un procédé et un système d'aide au pilotage embarqué sur un aéronef.

À cet effet, l'invention concerne un procédé automatique d'aide au pilotage d'un aéronef, permettant d'assurer la disponibilité d'au moins un pilote automatique et/ou un dispositif de régulation de poussée qui sont susceptibles d'être contrôlés en fonction d'une information de vitesse de l'aéronef, le pilote automatique correspondant à un système de pilotage automatique et/ou un directeur de vol, l'information de vitesse de l'aéronef étant déterminée à partir d'une ou plusieurs sources d'informations, le pilote automatique et/ou le dispositif de régulation de poussée étant configurés pour fonctionner selon un premier mode de guidage courant et une capacité d'approche sélectionnés par un pilote de l'aéronef compris dans un premier ensemble de modes de guidage sélectionnables et de capacités d'approche sélectionnables.

Selon l'invention, le procédé comprend :
- une étape de surveillance, mise en œuvre par un module de surveillance, consistant à pouvoir détecter la perte d'une ou plusieurs desdites une ou plusieurs sources d'informations permettant de déterminer l'information de vitesse de l'aéronef ;
en cas de détection d'une perte d'au moins une source d'informations, le procédé comprenant les étapes suivantes :
- une première étape de détermination, mise en œuvre par un module de détermination, consistant à choisir un deuxième ensemble prédéterminé de modes de guidage sélectionnables et de capacités d'approche sélectionnables en fonction de la ou des sources d'informations dont la perte a été détectée lors de l'étape de surveillance, le deuxième ensemble étant un sous-ensemble du premier ensemble ;
- une première étape d'utilisation, mise en œuvre par un module d'utilisation, consistant à faire fonctionner le pilote automatique et/ou le dispositif de régulation de poussée selon un deuxième mode de guidage courant et une capacité d'approche faisant partie du deuxième ensemble.

Ainsi, grâce à l'invention, les capacités opérationnelles du pilote automatique et du dispositif de régulation de poussée sont maximisées grâce à la prise en compte de tous les paramètres restant disponibles lorsque l'information de vitesse de l'aéronef n'est plus disponible parmi les sources d'informations. La charge de travail de l'équipage est par conséquent allégée.

Selon une particularité, le premier ensemble comprend en outre une première machine à états configurée pour gérer des transitions pour passer d'un mode de guidage parmi les modes de guidage du premier ensemble à un autre mode de guidage parmi les modes de guidage du premier ensemble,
la première étape de détermination consistant en outre à déterminer une deuxième machine à états configurée pour gérer des transitions pour passer d'un mode de guidage parmi les modes de guidage du deuxième ensemble à un autre mode de guidage parmi les modes de guidage du deuxième ensemble.

Selon une autre particularité :
- lorsque le premier mode de guidage courant fait partie à la fois du premier ensemble et du deuxième ensemble, il n'y a pas de changement du mode de guidage ;
- lorsque le premier mode de guidage courant ne fait pas partie du deuxième ensemble, il y a changement du mode de guidage vers un mode de guidage prédéterminé, faisant partie du deuxième ensemble.

Selon un mode de réalisation, après la détection d'une perte d'au moins une source d'informations, l'étape de surveillance continue à être mise en œuvre par le module de surveillance,
- en cas de détection de fin de perte de la ou des sources d'informations lors de l'étape de surveillance, l'étape de surveillance est suivie :
   o d'une deuxième étape d'utilisation, mise en œuvre par le module d'utilisation, consistant à faire fonctionner le pilote automatique et/ou le dispositif de régulation de poussée selon un mode de guidage courant et une capacité d'approche faisant partie du premier ensemble,
- en cas de détection de perte d'au moins une autre source d'informations lors de l'étape de surveillance, l'étape de surveillance est suivie :
   ∘ d'une deuxième étape de détermination, mise en œuvre par le module de détermination, consistant à modifier le deuxième ensemble de modes de guidage sélectionnables et de capacités d'approche sélectionnables en fonction de la ou des sources d'informations dont la perte a été détectée lors de l'étape de surveillance,
   ∘ une troisième étape d'utilisation, mise en œuvre par le module d'utilisation, consistant à faire fonctionner le pilote automatique et/ou le dispositif de régulation de poussée selon un troisième mode de guidage courant et une capacité d'approche compris dans le deuxième ensemble modifié.

Selon un mode de réalisation, les sources d'informations surveillées dans l'étape de surveillance comprennent au moins un capteur anémo-barométrique et au moins un estimateur de vitesse.

Avantageusement, le procédé comprend une étape de secours, mise en œuvre par un module de secours, consistant à déterminer une altitude et une vitesse verticale en utilisant une source d'informations auxiliaires comprenant un dispositif de géolocalisation ou une centrale inertielle associée à un dispositif de géolocalisation, l'étape de secours étant mise en œuvre si la perte de source d'informations consistant en la perte du ou de tous les capteurs anémo-barométriques ainsi que de l'estimateur de vitesse est détectée lors de l'étape de surveillance.

Par exemple, les modes de guidage sont compris parmi :
- des modes de guidage latéral suivants :
   ∘ un mode de suivi de cap,
   ∘ un mode de suivi de route,
   ∘ un mode de navigation sur plan de vol,
   ∘ un mode de capture latérale d'un faisceau d'approche,
   ∘ un mode de suivi latéral de faisceau d'approche,
   ∘ un mode de capture latérale d'un faisceau virtuel d'approche d'un système de navigation de l'aéronef,
   ∘ un mode de suivi latéral de faisceau virtuel d'approche du système de navigation ;
- des modes de guidage vertical suivants :
   ∘ un mode de tenue de vitesse verticale,
   ∘ un mode de tenue de pente,
   ∘ un mode de capture d'altitude,
   ∘ un mode de maintien d'altitude,
   ∘ un mode de montée après décollage ou de remise des gaz,
   ∘ un mode de montée à poussée constante ou de maintien de vitesse,
   ∘ un mode de descente à poussée constante ou de maintien de vitesse,
   ∘ un mode de suivi de profil vertical en montée,
   ∘ un mode de suivi de profil vertical en descente,
   ∘ un mode de suivi vertical de profil d'évitement de collision aérienne,
   ∘ un mode de capture verticale d'un faisceau d'approche,
   ∘ un mode de suivi vertical de faisceau d'approche,
   ∘ un mode de capture verticale d'un faisceau virtuel d'approche du système de navigation,
   ∘ un mode de suivi vertical de faisceau virtuel d'approche du système de navigation ;
- des modes de guidage de régulation de poussée suivants :
   ∘ un mode de maintien de vitesse,
   ∘ un mode de maintien du nombre de Mach,
   ∘ un mode de maintien de poussée.

En outre, les capacités d'approche classées selon une hauteur de décision et une portée visuelle de piste sont compris parmi :
- une première capacité d'approche pour laquelle la hauteur de décision est supérieure ou égale à 200 pieds et pour laquelle la portée visuelle de piste est supérieure ou égale à 2400 pieds,
- une deuxième capacité d'approche pour laquelle la hauteur de décision est supérieure ou égale à 100 pieds et strictement inférieure à 200 pieds et pour laquelle la portée visuelle de piste est supérieure ou égale à 1000 pieds,
- une troisième capacité d'approche pour laquelle la hauteur de décision est strictement inférieure à 100 pieds et pour laquelle la portée visuelle de piste est supérieure ou égale à 700 pieds,
- une quatrième capacité d'approche pour laquelle la hauteur de décision est supérieure ou égale à zéro et strictement inférieure à 50 pieds et pour laquelle la portée visuelle de piste est supérieure ou égale à 250 pieds et strictement inférieure à 700 pieds,
- une cinquième capacité d'approche pour laquelle la hauteur de décision et la portée visuelle de piste sont nulles.

Selon un mode de réalisation, les sources d'informations comprennent trois capteurs anémo-barométriques et un estimateur de vitesse, le premier ensemble comprenant tous les modes de guidage et toutes les capacités d'approche.

Par exemple, dans le cas où la perte d'un capteur anémo-barométrique est détectée lors de l'étape de surveillance, le deuxième ensemble déterminé dans la première étape de détermination correspond au premier ensemble.

En outre, dans le cas où la perte de deux capteurs anémo-barométriques est détectée dans l'étape de surveillance, le deuxième ensemble déterminé dans la première étape de détermination comprend tous les modes de guidage du premier ensemble et la première capacité d'approche.

De plus, dans le cas où la perte des trois capteurs anémo-barométriques est détectée, le deuxième ensemble déterminé dans la première étape de détermination comprend au moins :
- le mode de suivi de cap,
- le mode de suivi de route,
- le mode de capture latérale de faisceau d'approche,
- le mode de suivi latéral de faisceau d'approche,
- le mode de tenue de vitesse verticale,
- le mode de tenue de pente,
- le mode capture d'altitude,
- le mode de maintien d'altitude,
- le mode de montée après décollage ou de remise des gaz,
- le mode de montée à poussée constante ou de maintien de vitesse,
- le mode de descente à poussée constante ou de maintien de vitesse,
- le mode de capture verticale de faisceau d'approche,
- le mode de suivi vertical de faisceau d'approche,
- tous les modes de guidage de régulation de poussée,
- la première capacité d'approche.

Par ailleurs, dans le cas où la perte des trois capteurs anémo-barométriques et de l'estimateur de vitesse est détectée, le deuxième ensemble déterminé dans la première étape de détermination comprend au moins :
- le mode de suivi de cap,
- le mode de suivi de route,
- le mode de tenue de vitesse verticale,
- le mode de tenue de pente,
- le mode de maintien de poussée.

L'invention concerne également un système automatique d'aide au pilotage d'un aéronef, permettant d'assurer la disponibilité d'au moins un pilote automatique et/ou un dispositif de régulation de poussée qui est susceptible d'être contrôlé en fonction d'une information de vitesse de l'aéronef, le pilote automatique correspondant à un système de pilotage automatique et/ou un directeur de vol, l'information de vitesse de l'aéronef étant déterminée à partir d'une ou plusieurs sources d'informations, le pilote automatique et/ou le dispositif de régulation de poussée étant configuré pour fonctionner selon un premier mode de guidage courant et une capacité d'approche sélectionnés par un équipage de l'aéronef compris dans un premier ensemble de modes de guidage sélectionnables et de capacités d'approche sélectionnables.

Selon l'invention, le système comprend :
- un module de surveillance configuré pour pouvoir détecter la perte d'une ou plusieurs desdites une ou plusieurs sources d'informations permettant de déterminer la vitesse de l'aéronef ;
le système comprenant en outre les modules suivants mis en œuvre en cas de détection d'une perte d'au moins une source d'informations :
- un module de détermination configuré pour choisir un deuxième ensemble prédéterminé de modes de guidage sélectionnables et de capacités d'approche sélectionnables en fonction de la ou des sources d'informations dont la perte a été détectée par le module de surveillance, le deuxième ensemble étant un sous-ensemble du premier ensemble,
- un premier module d'utilisation configuré pour faire fonctionner le pilote automatique et/ou le dispositif de régulation de poussée selon un deuxième mode de guidage courant et une capacité d'approche compris dans le deuxième ensemble ;
le module de détermination et le premier module d'utilisation étant mis en œuvre en cas de détection d'une perte d'au moins une source d'informations.

L'invention concerne également un aéronef, en particulier un avion de transport, comportant un système d'aide au pilotage tel que décrit ci-dessus.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente schématiquement le système d'aide au pilotage,
- la figure 2 représente schématiquement le procédé d'aide au pilotage,
- la figure 3 représente un aéronef embarquant le système d'aide au pilotage.

### DESCRIPTION DÉTAILLÉE

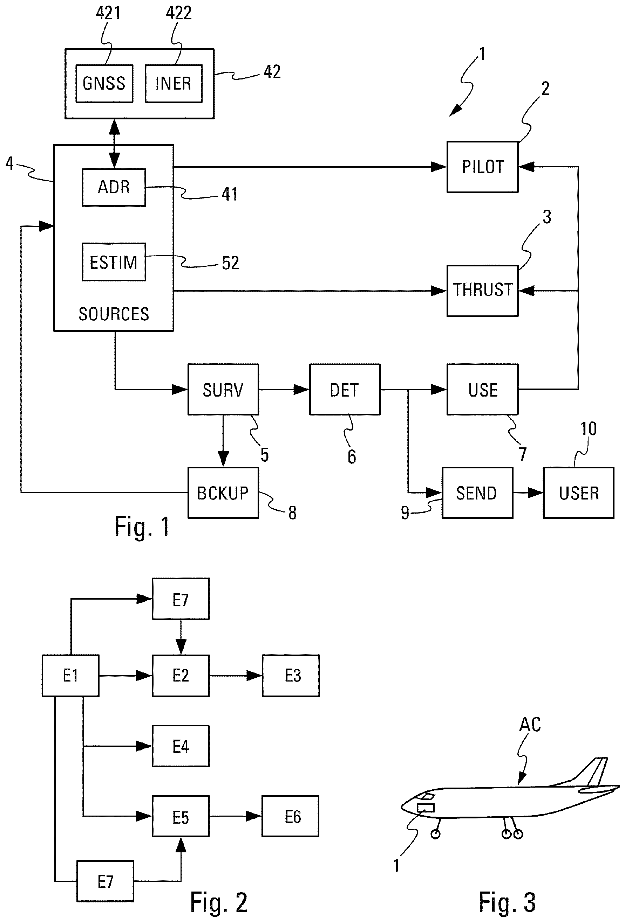

La figure 1 représente schématiquement un mode de réalisation d'un système automatique d'aide au pilotage 1 embarqué dans un aéronef AC (figure 3).

Le système d'aide au pilotage 1 permet d'assurer la disponibilité d'au moins un pilote automatique PILOT (PILOT pour « automatic pilot » en anglais) 2 et/ou un dispositif de régulation de poussée THRUST (THRUST pour « thrust regulation device » en anglais) 3 qui sont susceptibles d'être contrôlés en fonction d'une information de vitesse. L'information de vitesse est déterminée à partir d'au moins une source d'informations SOURCES (SOURCES pour « sources of information » en anglais) 4.

Le pilote automatique 2 peut correspondre à un système de pilotage automatique qui agit sur des gouvernes de l'aéronef AC pour assurer son guidage et/ou à un directeur de vol qui affiche automatiquement des informations sur un écran du poste de pilotage afin d'apporter une aide au pilotage manuel réalisé par le pilote de l'aéronef AC.

Le pilote automatique 2 et/ou le dispositif de régulation de poussée 3 sont configurés pour fonctionner selon un premier mode de guidage courant et une capacité d'approche sélectionnés par un équipage de l'aéronef AC faisant partie d'un premier ensemble de modes de guidage sélectionnables par l'équipage et de capacités d'approche sélectionnables par l'équipage.

Selon un mode de réalisation, les modes de guidage sont compris parmi des modes de guidage latéral, des modes de guidage vertical, des modes de guidage de régulation de poussée.

Le tableau suivant liste un exemple des principaux modes de guidage latéral, verticaux et de régulation de poussée.

| Modes de guidage latéral | |
|---|---|
| HDG | suivi de cap |
| TRK | suivi de route |
| NAV | navigation sur plan de vol |

| | |
|---|---|
| LOC* | Capture latérale de faisceau d'approche |
| LOC | Suivi latéral de faisceau d'approche |
| F-LOC* | Capture latérale de faisceau virtuel d'approche du système de navigation de l'aéronef |
| F-LOC | Suivi latéral de faisceau virtuel d'approche du système de navigation |

| Modes de guidage vertical | |
|---|---|
| VS | tenue de vitesse verticale |
| FPA | tenue de pente |
| ALT* | capture d'altitude |
| ALT | maintien d'altitude |
| SRS | montée après décollage ou remise des gaz |
| OP CLB | montée à poussée constante ou maintien de vitesse |
| OP DES | descente à poussée constante ou maintien de vitesse |
| CLB | suivi de profil vertical en montée |
| DES | suivi de profil vertical en descente |
| TCAS | suivi vertical de profil d'évitement de collision aérienne |
| G/S* | Capture verticale de faisceau d'approche |
| G/S | Suivi vertical de faisceau d'approche |
| F-G/S* | Capture verticale de faisceau virtuel d'approche du système de navigation |
| F-G/S | Suivi vertical de faisceau virtuel d'approche du système de navigation |

| Modes de guidage de régulation de poussée | |
|---|---|
| SPEED | maintien de vitesse |
| MACH | maintien de Mach |
| THR | maintien de poussée |

Les modes de guidage latéraux et verticaux sont utilisés pour faire fonctionner le pilote automatique 2. Les modes de guidage de régulation de poussée sont utilisés pour faire fonctionner le dispositif de régulation de poussée 3.

Il existe plusieurs catégories d'approche, ou autrement appelées capacités d'approche, liées, par exemple, à un système d'atterrissage aux instruments (ILS pour « Instrument Landing System » en anglais), à un système de renforcement au sol (GLS pour « GBAS Landing System » en anglais, GBAS pour Ground-Based Augmentation System » en anglais) et à un système de renforcement satellitaire (SLS pour « SBAS Landing System » en anglais, SBAS pour « Satellite-Based Landing System » en anglais).

Ces catégories d'approche correspondent à des possibilités d'approche en vue d'un atterrissage sur une piste d'atterrissage.

Le tableau suivant liste les catégories d'approche minimales.

| | Hauteur de décision (DH) | Portée visuelle de piste (RVR) |
|---|---|---|
| CAT I | DH ≥ 200 pieds | RVR ≥2400 pieds |
| | (≥ 61 m environ) | (RVR ≥ 731,5 m environ) |
| CAT II | 100 pieds ≤ DH < 200 pieds | RVR ≥ 1000 pieds |
| | (30,5 m ≤ DH < 61 m environ) | (RVR ≥ 305 m environ) |
| CAT III A | DH < 100 pieds | RVR ≥ 700 pieds |

| | | |
|---|---|---|
| | (DH < 30,5 m environ) | (RVR ≥ 213,5 m environ) |
| CAT III B | 0 < DH < 50 pieds | 250 pieds ≤ RVR ≤ 700 pieds |
| | (0 < DH < 15,25 m environ) | (76 m ≤ RVR ≤ 213,5 m environ) |
| CAT III C | DH = 0 | RVR = 0 |

La hauteur de décision (« decision height » en anglais) correspond à la hauteur à laquelle le pilote de l'aéronef AC décide si les références visuelles concernant la piste sont appropriées pour continuer l'approche. Si les références visuelles appropriées ne sont pas établies, le pilote doit effectuer une remise des gaz. Si les références visuelles appropriées sont établies, le pilote peut continuer l'approche. Cependant, le pilote peut décider d'exécuter une remise des gaz s'il juge que les références visuelles se sont dégradées.

La portée visuelle de piste (« runway visual range » en anglais) correspond à une distance de visibilité de la piste qui est identifiée à partir de marquages de surface ou de signaux lumineux délimitant la piste.

Le système d'aide au pilotage comprend un module de surveillance SURV (SURV pour « surveillance module » en anglais) 5 configuré pour pouvoir détecter la perte d'une ou plusieurs sources d'informations 4.

Selon un mode de réalisation, les sources d'informations 4 surveillées par le module de surveillance 5 comprennent au moins un capteur anémo-barométrique ADR (ADR pour « air data reference » en anglais) 41 et au moins un estimateur de vitesse ESTIM (ESTIM pour « estimating module » en anglais) 52.

Avantageusement, le système d'aide au pilotage 1 comprend un module de secours BCKUP (BCKUP pour « backup module » en anglais) 8 qui permet de déterminer une altitude et une vitesse verticale en utilisant une source d'informations auxiliaires 42 comprenant un dispositif de géolocalisation GNSS (GNSS pour « Global Navigation Satellite System » en anglais) 421 ou une centrale inertielle INER (INER pour « inertial measurment unit » en anglais) 422 associée à un dispositif de géolocalisation 421. Ledit module de secours 8 est mis en œuvre si la perte de sources d'informations consistant en la perte du ou de tous les capteurs anémo-barométriques 41 ainsi que de l'estimateur de vitesse 52 est détectée par le module de surveillance 5. Le dispositif de géolocalisation peut comprendre un système de géo-navigation par satellite tel qu'un système de géolocalisation par satellite (GPS pour « Global Positioning System » en anglais).

Le système d'aide au pilotage 1 comprend en outre un module de détermination DET (DET pour « determination module » en anglais) 6 et un module d'utilisation USE (USE pour « using module » en anglais) 7 qui sont mis en œuvre en cas de détection d'une perte d'au moins une source d'informations 4.

Le module de détermination 6 est configuré pour choisir un deuxième ensemble prédéterminé de modes de guidage sélectionnables par l'équipage et de capacités d'approche sélectionnables par l'équipage en fonction de la ou des sources d'informations 4 dont la perte a été détectée par le module de surveillance 5. Le deuxième ensemble correspond à un sous-ensemble du premier ensemble.

Le module d'utilisation 7 est configuré pour faire fonctionner le pilote automatique 2 et/ou le dispositif de régulation de poussée 3 selon un deuxième mode de guidage courant et une capacité d'approche faisant partie du deuxième ensemble.

Le pilote automatique 2 et le dispositif de régulation de poussée 3 s'appuient usuellement sur une machine à état standard qui permet de gérer les transitions entre les modes de guidage sur requête du pilote.

Ainsi, selon une variante, le premier ensemble comprend aussi une première machine à états configurée pour gérer des transitions pour passer d'un mode de guidage parmi les modes de guidage du premier ensemble à un autre mode de guidage parmi les modes de guidage du premier ensemble.

Dans cette variante, le module de détermination 6 est également configuré déterminer une deuxième machine à états configurée pour gérer des transitions pour passer d'un mode de guidage parmi les modes de guidage du deuxième ensemble à un autre mode de guidage parmi les modes de guidage du deuxième ensemble.

De façon avantageuse, lorsque le premier mode de guidage courant fait partie à la fois du premier ensemble et du deuxième ensemble choisi par le module de détermination 6, il n'y a pas changement de mode de guidage. Lorsque le premier mode de guidage courant ne fait pas partie du deuxième ensemble déterminé par le module de détermination 6, il y a un changement du mode de guidage vers un mode de guidage prédéterminé, faisant partie du deuxième ensemble. Le mode de guidage prédéterminé est fonction des sources d'informations 4 encore disponibles.

Après la détection d'une perte d'au moins une source d'informations 4 par le module de surveillance 5, ledit module de surveillance 5 peut continuer à détecter les pertes de sources d'informations 4.

Ainsi, en cas de détection de fin de perte de la ou des sources d'informations 4 détectées précédemment, le module d'utilisation 7 permet l'utilisation par le pilote automatique 2 et/ou le dispositif de régulation de poussée 3 d'un mode de guidage courant et d'une capacité d'approche faisant partie du premier ensemble.

Par ailleurs, en cas de détection de perte d'au moins une autre source d'informations, le module de détermination 6 permet de modifier le deuxième ensemble de modes de guidage sélectionnables et de capacités d'approche sélectionnables en fonction de la ou des sources d'informations 4 dont la perte a été détectée par le module de surveillance 5. De plus, le module d'utilisation 7 permet l'utilisation par le pilote automatique 2 et/ou le dispositif de régulation de poussée 3 d'un troisième mode de guidage courant et une capacité d'approche faisant partie du deuxième ensemble modifié.

Dans un mode de réalisation préféré, les sources d'informations 4 comprennent trois capteurs anémo-barométriques 41 et un estimateur de vitesse 52. Le premier ensemble comprenant tous les modes de guidage et toutes les capacités d'approche disponibles pour l'aéronef AC.

Le mode de réalisation décrit ci-dessous met en œuvre les modes de guidage et les capacités d'approche listés sur les tableaux précédents. Toutefois, ce mode de réalisation peut mettre en œuvre d'autres modes de réalisation et d'autres capacités d'approche.

Dans le cas où la perte d'un capteur anémo-barométrique 41 est détectée par le module de surveillance 5, le deuxième ensemble déterminé par le module de détermination 6 correspond au premier ensemble.

Dans le cas où la perte de deux capteurs anémo-barométriques 41 est détectée par le module de surveillance 5, le deuxième ensemble déterminée par le module de détermination 6 comprend tous les modes de guidage du premier ensemble et la première capacité d'approche CAT I.

Dans le cas où la perte des trois capteurs anémo-barométriques 41 ainsi que de l'estimateur de vitesse 52 est détectée par le module de surveillance 5, le module de secours 8 est mis en œuvre afin de déterminer une altitude et une vitesse verticale en utilisant une source d'informations auxiliaires 42 comprenant un dispositif de géolocalisation 421 ou une centrale inertielle 422 associée à un dispositif de géolocalisation 421.

Le deuxième ensemble déterminé alors par le module de détermination 6 comprend au moins :
- le mode de suivi de cap HDG,
- le mode de suivi de route TRK,
- le mode de capture latérale de faisceau d'approche LOC*,
- le mode de suivi latéral de faisceau d'approche LOC,
- le mode de tenue de vitesse verticale VS,
- le mode de tenue de pente FPA,
- le mode capture d'altitude ALT*,
- le mode de maintien d'altitude ALT,
- le mode de montée après décollage ou de remise des gaz SRS,
- le mode de montée à poussée constante ou de maintien de vitesse OP CLB,
- le mode de descente à poussée constante ou de maintien de vitesse OP DES,
- le mode de capture verticale de faisceau d'approche G/S*,
- le mode de suivi vertical de faisceau d'approche G/S,
- tous les modes de guidage de régulation de poussée SPEED, MACH, THR,
- la première capacité d'approche CAT I.

Le mode de navigation sur plan de vol NAV, le mode de capture latérale de faisceau virtuel d'approche du système de navigation F-LOC* et le mode de suivi latéral de faisceau virtuel d'approche du système de navigation F-LOC sont désengagés pour être remplacés par le mode de suivi de cap HDG ou le mode de suivi de route TRK suivant que la référence courante de vol soit respectivement une tenue de cap ou une tenue de route. Le mode de suivi de profil vertical en montée CLB, le mode de suivi de profil vertical en descente DES, le mode de capture verticale de faisceau virtuel d'approche du système de navigation G/S* et le mode de suivi vertical de faisceau virtuel d'approche du système de navigation G/S sont désengagés pour être remplacés par le mode de tenue de vitesse verticale VS ou le mode de tenue de pente FPA suivant que la référence courante de vol soit respectivement une tenue de vitesse verticale ou une tenue de pente. Le mode de suivi vertical de profil d'évitement de collision aérienne TCAS est désengagé pour être remplacé par le mode de tenue de vitesse verticale VS.

Le faisceau d'approche latérale pour les modes de guidage LOC et LOC* peut correspondre à un faisceau d'approche Localizer. Le faisceau d'approche verticale pour les modes de guidage G/S et G/S* peut correspondre à un faisceau d'approche Glide.

Le faisceau d'approche Localizer fournit un écart de l'aéronef AC par rapport à un axe de piste. Le faisceau d'approche Glide fournit un écart par rapport à une pente nominale d'approche.

Dans le cas où la perte des trois capteurs anémo-barométriques 41 et de l'estimateur de vitesse 52 est détectée par le module de surveillance 5, le deuxième ensemble déterminé par le module de détermination 6 comprend au moins :
- le mode de suivi de cap HDG,
- le mode de suivi de route TRK,
- le mode de tenue de vitesse verticale VS,
- le mode de tenue de pente FPA,
- le mode de maintien de poussée THR.

Dans un mode de réalisation avantageux, lors du basculement d'une référence d'altitude barométrique (ou barométrique-inertielle) à une référence du système GNSS ou du système GNSS associé à une centrale inertielle (GNSS-inertielle), l'altitude courante de l'aéronef AC dans chacune des deux références peut différer de plusieurs milliers de pieds. Des mécanismes de réversions de modes de guidage du pilote automatique sont mis en place pour gérer la transition entre ces deux références :
- de barométrique vers GNSS-inertiel ;
- de GNSS-inertiel vers barométrique.

Ainsi, de façon non exhaustive :
- le mode de capture d'altitude ALT* ou le mode de maintien d'altitude ALT est désengagé pour être remplacé par le mode de tenue de vitesse verticale VS ou le mode de tenue de pente FPA ;
- le mode de montée à poussée constante OP CLB ou le mode de descente à poussée constante OP DES sont désengagés pour être remplacés par le mode de tenue de vitesse verticale VS ou le mode de tenue de pente FPA, si la consigne d'altitude n'est plus, respectivement, au-dessus ou en dessous de l'altitude de l'aéronef AC dans la nouvelle référence.

Dans un autre mode de réalisation avantageux, des messages d'alerte sont envoyés au poste de pilotage pour chaque niveau de capacité opérationnelle, de façon à indiquer à l'équipage les modes de guidage et les capacités d'approche restants du pilote automatique 2 et du dispositif de régulation de poussée 3. Les messages peuvent être envoyés par un module d'envoi SEND (SEND pour « sending module » en anglais) 9 qui est configuré pour envoyer un signal représentatif de l'ensemble des modes de guidage disponibles et des capacités d'approche disponibles à un dispositif utilisateur USER (USER pour « user device » en anglais) 10. Le module d'envoi 9 peut être compris dans le système d'aide au pilotage 1. Le dispositif utilisateur 10 peut comprendre un écran qui est agencé pour afficher l'ensemble des modes de guidage disponibles et des capacités d'approche disponibles.

L'invention concerne également un procédé automatique d'aide au pilotage d'un aéronef AC. Ledit procédé, représenté schématiquement sur la figure 2, comprend :
- une étape E1 de surveillance, mise en œuvre par le module de surveillance 5, consistant à pouvoir détecter la perte d'une ou plusieurs sources d'informations 4.

En cas de détection d'une perte d'au moins une source d'informations 4, le procédé comprend en outre les étapes suivantes :
- une étape E2 de détermination, mise en œuvre par le module de détermination 6, consistant à choisir un deuxième ensemble prédéterminé de modes de guidage sélectionnables et de capacités d'approche sélectionnables en fonction de la ou des sources d'informations 4 dont la perte a été détectée lors de l'étape E1 de surveillance,
- une étape E3 d'utilisation, mise en œuvre par le module d'utilisation 7, consistant à faire fonctionner le pilote automatique 2 et/ou le dispositif de régulation de poussée 3 selon un deuxième mode de guidage courant et une capacité d'approche faisant partie du deuxième ensemble.

Selon une variante, l'étape E2 de détermination consiste en outre à déterminer une deuxième machine à états configurée pour gérer des transitions pour passer d'un mode de guidage parmi les modes de guidage du deuxième ensemble à un autre mode de guidage parmi les modes de guidage du deuxième ensemble.

Après la détection d'une perte d'au moins une source d'informations 4, l'étape E1 de surveillance peut continuer à être mise en œuvre par le module de surveillance 5.

Ainsi, en cas de détection de fin de perte de la ou des sources d'informations 4 lors de l'étape E1 de surveillance, l'étape E1 de surveillance est suivie :
- d'une étape E4 d'utilisation, mise en œuvre par le module d'utilisation 7, consistant à faire fonctionner le pilote automatique 2 et/ou le dispositif de régulation de poussée 3 selon un mode de guidage courant et une capacité d'approche compris dans le premier ensemble.

De plus, en cas de détection de perte d'au moins une autre source d'informations 4 lors de l'étape E1 de surveillance, l'étape E1 de surveillance est suivie :
- d'une étape E5 de détermination, mise en œuvre par le module de détermination 6, consistant à modifier le deuxième ensemble de modes de guidage sélectionnables et de capacités d'approche sélectionnables en fonction de la ou des sources d'informations 4 dont la perte a été détectée lors de l'étape E1 de surveillance,
- une étape E6 d'utilisation, mise en œuvre par le module d'utilisation 7, consistant à faire fonctionner le pilote automatique 2 et/ou le dispositif de régulation de poussée 3 selon un troisième mode de guidage courant et une capacité d'approche compris dans le deuxième ensemble modifié.

Avantageusement, le procédé comprend une étape E7 de secours, mise en œuvre par le module de secours 8, consistant à déterminer une altitude et une vitesse verticale en utilisant une source d'informations auxiliaires 42 comprenant un dispositif de géolocalisation 421 ou une centrale inertielle 422 associée à un dispositif de géolocalisation 421. L'étape E7 de secours est mise en œuvre si la perte de sources d'informations consistant en la perte du ou de tous les capteurs anémo-barométriques 41 ainsi que de l'estimateur de vitesse 52 est détectée lors de l'étape E1 de surveillance.

Le procédé et le système d'aide au pilotage permettent ainsi d'augmenter la disponibilité des dispositifs de guidage automatiques de l'aéronef AC tout en conservant des capacités opérationnelles maximum du pilote automatique 2 et du dispositif de régulation de poussée 3 suivant le contexte de pannes anémométriques courantes.

On notera, par ailleurs, qu'un pilote automatique 2 et un dispositif de régulation de la poussée 3 actuels contiennent un nombre important de modes de guidage différents qui correspondent, chacun, à un objectif que l'équipage peut sélectionner en fonction de ses intentions. L'apprentissage de ces différents modes de guidage et de leurs transitions représent une part non négligeable de l'entraînement des équipages. Aussi, l'introduction de nouveaux modes de guidage du pilote automatique et/ou du dispositif de régulation de la poussée nécessite, en général, une nouvelle phase d'apprentissage, voire d'entraînement récurrent si ce mode de guidage est uniquement utilisable dans des cas exceptionnels qui, généralement, ne se rencontrent pas en utilisation normale de l'aéronef AC.

Ainsi, grâce à une disponibilité accrue du pilote automatique 2 et du dispositif de régulation de poussée 3 et grâce à la préservation de leur capacité opérationnelles, le procédé et le système d'aide au pilotage permettent de préserver la continuité des opérations en cours ou, au minima, de proposer des fonctions basiques.

Le procédé et le système d'aide au pilotage permettent également d'avoir une assistance accrue du contrôle de l'aéronef AC et d'alléger la charge de travail de l'équipage de l'aéronef AC pour lui laisser la place à un renforcement de ses activités d'analyse et de surveillance des éléments présentant une panne.

## Revendications

1. Procédé automatique d'aide au pilotage d'un aéronef, permettant d'assurer la disponibilité d'au moins un pilote automatique (2) et/ou un dispositif de régulation de poussée (3) qui sont susceptibles d'être contrôlés en fonction d'une information de vitesse de l'aéronef, le pilote automatique (2) correspondant à un système de pilotage automatique et/ou un directeur de vol, l'information de vitesse de l'aéronef étant déterminée à partir d'une ou plusieurs sources d'informations (4), le pilote automatique (2) et/ou le dispositif de régulation de poussée (3) étant configurés pour fonctionner selon un premier mode de guidage courant et une capacité d'approche sélectionnés par un pilote de l'aéronef (AC) compris dans un premier ensemble de modes de guidage sélectionnables et de capacités d'approche sélectionnables,
le procédé comprenant une étape (E1) de surveillance, mise en œuvre par un module de surveillance (5), consistant à pouvoir détecter la perte d'une ou plusieurs desdites une ou plusieurs sources d'informations (4) permettant de déterminer l'information de vitesse de l'aéronef ;
**caractérisé en ce qu'**en cas de détection d'une perte d'au moins une source d'informations (4), le procédé comprend les étapes suivantes :
- une première étape (E2) de détermination, mise en œuvre par un module de détermination (6), consistant à choisir un deuxième ensemble prédéterminé de modes de guidage sélectionnables et de capacités d'approche sélectionnables en fonction de la ou des sources d'informations (4) dont la perte a été détectée lors de l'étape (E1) de surveillance, le deuxième ensemble étant un sous-ensemble du premier ensemble ;
- une première étape (E3) d'utilisation, mise en œuvre par un module d'utilisation (7), consistant à faire fonctionner le pilote automatique (2) et/ou le dispositif de régulation de poussée (3) selon un deuxième mode de guidage courant et une capacité d'approche faisant partie du deuxième ensemble.

2. Procédé selon la revendication 1,
**caractérisé en ce que** le premier ensemble comprend en outre une première machine à états configurée pour gérer des transitions pour passer d'un mode de guidage parmi les modes de guidage du premier ensemble à un autre mode de guidage parmi les modes de guidage du premier ensemble,
la première étape (E2) de détermination consistant en outre à déterminer une deuxième machine à états configurée pour gérer des transitions pour passer d'un mode de guidage parmi les modes de guidage du deuxième ensemble à un autre mode de guidage parmi les modes de guidage du deuxième ensemble.

3. Procédé selon l'une quelconque des revendications 1 à 2,
**caractérisé en ce que** :
- lorsque le premier mode de guidage courant fait partie à la fois du premier ensemble et du deuxième ensemble, il n'y a pas changement du mode de guidage ;
- lorsque le premier mode de guidage courant ne fait pas partie du deuxième ensemble, il y a un changement du mode de guidage vers un mode de guidage prédéterminé, faisant partie du deuxième ensemble.

4. Procédé selon l'une quelconque des revendications 1 à 3,
**caractérisé en ce que**, après la détection d'une perte d'au moins une source d'informations (4), l'étape (E1) de surveillance continue à être mise en œuvre par le module de surveillance (5),
- en cas de détection de fin de perte de la ou des sources d'informations (4) lors de l'étape (E1) de surveillance, l'étape (E1) de surveillance est suivie :
∘ d'une deuxième étape (E4) d'utilisation, mise en œuvre par le module d'utilisation (7), consistant à faire fonctionner le pilote automatique (2) et/ou le dispositif de régulation de poussée (3) selon un mode de guidage courant et une capacité d'approche faisant partie du premier ensemble,
- en cas de détection de perte d'au moins une autre source d'informations lors de l'étape (E1) de surveillance, l'étape (E1) de surveillance est suivie :
∘ d'une deuxième étape (E5) de détermination, mise en œuvre par le module de détermination (6), consistant à modifier le deuxième ensemble de modes de guidage sélectionnables et de capacités d'approche sélectionnables en fonction de la ou des sources d'informations (4) dont la perte a été détectée lors de l'étape (E1) de surveillance,
∘ une troisième étape (E6) d'utilisation, mise en œuvre par le module d'utilisation (7), consistant à faire fonctionner le pilote automatique (2) et/ou le dispositif de régulation de poussée (3) selon un troisième mode de guidage courant et une capacité d'approche compris dans le deuxième ensemble modifié.

5. Procédé selon l'une quelconque des revendications 1 à 4,
**caractérisé en ce que** les sources d'informations (4) surveillées dans l'étape (E1) de surveillance comprennent au moins un capteur anémo-barométrique (41) et au moins un estimateur de vitesse (52).

6. Procédé selon l'une quelconque des revendications 1 à 5,
**caractérisé en ce que** le procédé comprend une étape (E7) de secours, mise en œuvre par un module de secours (8), consistant à déterminer une altitude et une vitesse verticale en utilisant une source d'informations auxiliaires (42) comprenant un dispositif de géolocalisation (421) ou une centrale inertielle (422) associée à un dispositif de géolocalisation (421), l'étape (E7) de secours étant mise en œuvre si la perte de source d'informations consistant en la perte du ou de tous les capteurs anémo-barométriques (41) ainsi que de l'estimateur de vitesse (52) est détectée lors de l'étape (E1) de surveillance.

7. Procédé selon l'une quelconque des revendications 1 à 6,
**caractérisé en ce que** les modes de guidage sont compris parmi :
- des modes de guidage latéral suivants :
∘ un mode de suivi de cap (HDG),
∘ un mode de suivi de route (TRK),
∘ un mode de navigation sur plan de vol (NAV),
∘ un mode de capture latérale d'un faisceau d'approche (LOC*),
∘ un mode de suivi latéral de faisceau d'approche Localizer (LOC),
∘ un mode de capture latérale d'un faisceau virtuel d'approche d'un système de navigation de l'aéronef (F-LOC*),
∘ un mode de suivi latéral de faisceau virtuel d'approche du système de navigation (F-LOC) ;
- des modes de guidage vertical suivants :
∘ un mode de tenue de vitesse verticale (VS),
∘ un mode de tenue de pente (FPA),
∘ un mode de capture d'altitude (ALT*),
∘ un mode de maintien d'altitude (ALT),
∘ un mode de montée après décollage ou de remise des gaz (SRS),
∘ un mode de montée à poussée constante ou de maintien de vitesse (OP CLB),
∘ un mode de descente à poussée constante ou de maintien de vitesse (OP DES),
∘ un mode de suivi de profil vertical en montée (CLB),
∘ un mode de suivi de profil vertical en descente (DES),
∘ un mode de suivi vertical de profil d'évitement de collision aérienne (TCAS),
∘ un mode de capture verticale d'un faisceau d'approche (G/S*),
∘ un mode de suivi vertical de faisceau d'approche (G/S),
∘ un mode de capture verticale d'un faisceau virtuel d'approche du système de navigation (F-G/S*),
∘ un mode de suivi vertical de faisceau virtuel d'approche du système de navigation (F-G/S) ;
- des modes de guidage de régulation de poussée suivants :
∘ un mode de maintien de vitesse (SPEED),
∘ un mode de maintien du nombre de Mach (MACH),
∘ un mode de maintien de poussée (THR).

8. Procédé selon l'une quelconque des revendications 1 à 7,
**caractérisé en ce que** les capacités d'approche classées selon une hauteur de décision et une portée visuelle de piste sont compris parmi :
- une première capacité d'approche (CAT I) pour laquelle la hauteur de décision est supérieure ou égale à 200 pieds et pour laquelle la portée visuelle de piste est supérieure ou égale à 2400 pieds,
- une deuxième capacité d'approche (CAT II) pour laquelle la hauteur de décision est supérieure ou égale à 100 pieds et strictement inférieure à 200 pieds et pour laquelle la portée visuelle de piste est supérieure ou égale à 1000 pieds,
- une troisième capacité d'approche (CAT III A) pour laquelle la hauteur de décision est strictement inférieure à 100 pieds et pour laquelle la portée visuelle de piste est supérieure ou égale à 700 pieds,
- une quatrième capacité d'approche (CAT III B) pour laquelle la hauteur de décision est supérieure ou égale à zéro et strictement inférieure à 50 pieds et pour laquelle la portée visuelle de piste est supérieure ou égale à 250 pieds et strictement inférieure à 700 pieds,
- une cinquième capacité d'approche (CAT III C) pour laquelle la hauteur de décision et la portée visuelle de piste sont nulles.

9. Procédé selon l'une quelconque des revendications 1 à 6,
**caractérisé en ce que** les sources d'informations (4) comprennent trois capteurs anémo-barométriques (41) et un estimateur de vitesse (52), le premier ensemble comprenant tous les modes de guidage et toutes les capacités d'approche.

10. Procédé selon l'une quelconque des revendications 7 ou 8,
**caractérisé en ce que**, dans le cas où la perte d'un capteur anémo-barométrique (41) est détectée lors de l'étape (E1) de surveillance, le deuxième ensemble déterminé dans la première étape (E2) de détermination correspond au premier ensemble.

11. Procédé selon l'une quelconque des revendications 7 à 9,
**caractérisé en ce que**, les sources d'informations (4) comprenant trois capteurs anémo-barométriques (41) et un estimateur de vitesse (52), dans le cas où la perte de deux capteurs anémo-barométriques (41) est détectée dans l'étape (E1) de surveillance, le deuxième ensemble déterminé dans la première étape (E2) de détermination comprend tous les modes de guidage du premier ensemble et la première capacité d'approche (CAT I).

12. Procédé selon l'une quelconque des revendications 7 à 10,
**caractérisé en ce que**, les sources d'informations (4) comprenant trois capteurs anémo-barométriques (41) et un estimateur de vitesse (52), dans le cas où la perte des trois capteurs anémo-barométriques (41) est détectée, le deuxième ensemble déterminé dans la première étape (E2) de détermination comprend au moins :
- le mode de suivi de cap (HDG),
- le mode de suivi de route (TRK),
- le mode de capture latérale de faisceau d'approche (LOC*),
- le mode de suivi latéral de faisceau d'approche (LOC),
- le mode de tenue de vitesse verticale (VS),
- le mode de tenue de pente (FPA),
- le mode capture d'altitude (ALT*),
- le mode de maintien d'altitude (ALT),
- le mode de montée après décollage ou de remise des gaz (SRS),
- le mode de montée à poussée constante ou de maintien de vitesse (OP CLB),
- le mode de descente à poussée constante ou de maintien de vitesse (OP DES),
- le mode de capture verticale de faisceau d'approche (G/S*),
- le mode de suivi vertical de faisceau d'approche (G/S),
- tous les modes de guidage de régulation de poussée (SPEED, MACH, THR),
- la première capacité d'approche (CAT I).

13. Procédé selon l'une quelconque des revendications 7 à 11,
**caractérisé en ce que**, les sources d'informations (4) comprenant trois capteurs anémo-barométriques (41) et un estimateur de vitesse (52), dans le cas où la perte des trois capteurs anémo-barométriques (41) et de l'estimateur de vitesse (52) est détectée, le deuxième ensemble déterminé dans la première étape (E2) de détermination comprend au moins :
- le mode de suivi de cap (HDG),
- le mode de suivi de route (TRK),
- le mode de tenue de vitesse verticale (VS),
- le mode de tenue de pente (FPA),
- le mode de maintien de poussée (THR).

14. Système automatique d'aide au pilotage d'un aéronef, permettant d'assurer la disponibilité d'au moins un pilote automatique (2) et/ou un dispositif de régulation de poussée (3) qui est susceptible d'être contrôlé en fonction d'une information de vitesse de l'aéronef, le pilote automatique (2) correspondant à un système de pilotage automatique et/ou un directeur de vol, l'information de vitesse de l'aéronef étant déterminée à partir d'une ou plusieurs sources d'informations (4), le pilote automatique (2) et/ou le dispositif de régulation de poussée (3) étant configuré pour fonctionner selon un premier mode de guidage courant et une capacité d'approche sélectionnés par un équipage de l'aéronef (AC) compris dans un premier ensemble de modes de guidage sélectionnables et de capacités d'approche sélectionnables,
le système comprenant un module de surveillance (5) configuré pour pouvoir détecter la perte d'une ou plusieurs desdites une ou plusieurs sources d'informations (4) permettant de déterminer la vitesse de l'aéronef, **caractérisé en ce qu'**il comprend :
- un module de détermination (6) configuré pour choisir un deuxième ensemble prédéterminé de modes de guidage sélectionnables et de capacités d'approche sélectionnables en fonction de la ou des sources d'informations (4) dont la perte a été détectée par le module de surveillance (5), le deuxième ensemble étant un sous-ensemble du premier ensemble,
- un premier module d'utilisation (7) configuré pour faire fonctionner le pilote automatique (2) et/ou le dispositif de régulation de poussée (3) selon un deuxième mode de guidage courant et une capacité d'approche compris dans le deuxième ensemble ;
le module de détermination (6) et le premier module d'utilisation (7) étant mis en œuvre en cas de détection d'une perte d'au moins une source d'informations (4).

15. Aéronef,
**caractérisé en ce qu'**il comporte un système d'aide au pilotage (1), tel que celui spécifié sous la revendication 14.

## Patentansprüche

1. Automatisches Verfahren zur Flughilfe für ein Luftfahrzeug, welches ermöglicht, die Verfügbarkeit wenigstens eines Autopiloten (2) und/oder eines Schubreglers (3) sicherzustellen, welche dazu eingerichtet sind, in Abhängigkeit von einer Geschwindigkeitsinformation des Luftfahrzeugs gesteuert zu werden, wobei der Autopilot (2) einem automatischen Flugsteuerungssystem und/oder einem Flight Director entspricht, wobei die Geschwindigkeitsinformation des Luftfahrzeugs anhand einer oder mehrerer Informationsquellen (4) bestimmt wird, wobei der Autopilot (2) und/oder der Schubregler (3) dafür ausgelegt sind, gemäß einem ersten aktuellen Führungsmodus und einer Anflugkategorie zu arbeiten, die von einem Piloten des Luftfahrzeugs (AC) ausgewählt werden und in einer ersten Menge von auswählbaren Führungsmodi und von auswählbaren Anflugkategorien enthalten sind, wobei das Verfahren umfasst einen Überwachungsschritt (E1), der von einem Überwachungsmodul (5) durchgeführt wird und darin besteht, den Verlust einer oder mehrerer der einen oder mehreren Informationsquellen (4), die es ermöglichen, die Geschwindigkeitsinformation des Luftfahrzeugs zu bestimmen, erkennen zu können; **dadurch gekennzeichnet, dass** im Fall der Erkennung eines Verlustes wenigstens einer Informationsquelle (4) das Verfahren die folgenden Schritte umfasst:
- einen ersten Bestimmungsschritt (E2), der von einem Bestimmungsmodul (6) durchgeführt wird und darin besteht, eine vorbestimmte zweite Menge von auswählbaren Führungsmodi und von auswählbaren Anflugkategorien in Abhängigkeit von der oder den Informationsquellen (4), deren Verlust im Überwachungsschritt (E1) erkannt worden ist, zu wählen, wobei die zweite Menge eine Untermenge der ersten Menge ist;
- einen ersten Benutzungsschritt (E3), der von einem Benutzungsmodul (7) durchgeführt wird und darin besteht, den Autopiloten (2) und/oder den Schubregler (3) gemäß einem zweiten aktuellen Führungsmodus und einer Anflugkategorie, die der zweiten Menge angehören, arbeiten zu lassen.

2. Verfahren nach Anspruch 1,
**dadurch gekennzeichnet, dass** die erste Menge außerdem eine erste Zustandsmaschine umfasst, die dafür ausgelegt ist, Übergänge zum Wechseln von einem Führungsmodus von den Führungsmodi der ersten Menge zu einem anderen Führungsmodus von den Führungsmodi der ersten Menge zu verwalten,
wobei der erste Bestimmungsschritt (E2) außerdem darin besteht, eine zweite Zustandsmaschine zu bestimmen, die dafür ausgelegt ist, Übergänge zum Wechseln von einem Führungsmodus von den Führungsmodi der zweiten Menge zu einem anderen Führungsmodus von den Führungsmodi der zweiten Menge zu verwalten.

3. Verfahren nach einem der Ansprüche 1 bis 2, **dadurch gekennzeichnet, dass**:
- wenn der erste aktuelle Führungsmodus gleichzeitig der ersten Menge und der zweiten Menge angehört, kein Wechsel des Führungsmodus erfolgt;
- wenn der erste aktuelle Führungsmodus der zweiten Menge nicht angehört, ein Wechsel des Führungsmodus zu einem vorbestimmten Führungsmodus erfolgt, welcher der zweiten Menge angehört.

4. Verfahren nach einem der Ansprüche 1 bis 3,
**dadurch gekennzeichnet, dass** nach der Erkennung eines Verlustes wenigstens einer Informationsquelle (4) der Überwachungsschritt (E1) weiterhin von dem Überwachungsmodul (5) durchgeführt wird,
- im Fall einer Erkennung eines Endes des Verlustes der Informationsquelle oder der Informationsquellen (4) im Überwachungsschritt (E1) auf den Überwachungsschritt (E1) folgt:
∘ ein zweiter Benutzungsschritt (E4), der von dem Benutzungsmodul (7) durchgeführt wird und darin besteht, den Autopiloten (2) und/oder den Schubregler (3) gemäß einem aktuellen Führungsmodus und einer Anflugkategorie, die der ersten Menge angehören, arbeiten zu lassen,
- im Fall einer Erkennung eines Verlustes wenigstens einer weiteren Informationsquelle im Überwachungsschritt (E1) auf den Überwachungsschritt (E1) folgen:
∘ ein zweiter Bestimmungsschritt (E5), der von dem Bestimmungsmodul (6) durchgeführt wird und darin besteht, die zweite Menge von auswählbaren Führungsmodi und von auswählbaren Anflugkategorien in Abhängigkeit von der oder den Informationsquellen (4), deren Verlust im Überwachungsschritt (E1) erkannt worden ist, zu ändern,
∘ ein dritter Benutzungsschritt (E6), der von dem Benutzungsmodul (7) durchgeführt wird und darin besteht, den Autopiloten (2) und/oder den Schubregler (3) gemäß einem dritten aktuellen Führungsmodus und einer Anflugkategorie, die in der geänderten zweiten Menge enthalten sind, arbeiten zu lassen.

5. Verfahren nach einem der Ansprüche 1 bis 4,
**dadurch gekennzeichnet, dass** die Informationsquellen (4), die im Überwachungsschritt (E1) überwacht werden, wenigstens einen Luftgeschwindigkeits- und Luftdrucksensor (41) und wenigstens einen Geschwindigkeitsschätzer (52) umfassen.

6. Verfahren nach einem der Ansprüche 1 bis 5,
**dadurch gekennzeichnet, dass** das Verfahren einen Notfallschritt (E7) umfasst, der von einem Notfallmodul (8) durchgeführt wird und darin besteht, eine Höhe und eine Vertikalgeschwindigkeit unter Verwendung einer Quelle von Hilfsinformationen (42) zu bestimmen, die eine Ortsbestimmungsvorrichtung (421) oder ein Trägheitsnavigationsleitsystem (422), das einer Ortsbestimmungsvorrichtung (421) zugeordnet ist, umfasst, wobei der Notfallschritt (E7) durchgeführt wird, falls im Überwachungsschritt (E1) der Verlust von Informationsquellen, der im Verlust des oder aller Luftgeschwindigkeits- und Luftdrucksensoren (41) und sowie des Geschwindigkeitsschätzers (52) besteht, erkannt wird.

7. Verfahren nach einem der Ansprüche 1 bis 6, **dadurch gekennzeichnet, dass** es sich bei den Führungsmodi handeln kann um:
- folgende laterale Führungsmodi:
∘ einen Steuerkurs-Modus (HDG),
∘ einen Modus "Kurs über Grund" (TRK),
∘ einen Modus der Navigation nach Flugplan (NAV),
∘ einen Modus der seitlichen Erfassung eines Anflugleitstrahls (LOC*),
∘ einen Modus der seitlichen Verfolgung eines Anflugleitstrahls des Localizers (LOC),
∘ einen Modus der seitlichen Erfassung eines virtuellen Anflugleitstrahls eines Navigationssystems des Luftfahrzeugs (F-LOC*),
∘ einen Modus der seitlichen Verfolgung eines virtuellen Anflugleitstrahls des Navigationssystems (F-LOC);
- folgende vertikale Führungsmodi:
∘ einen Modus des Haltens der Vertikalgeschwindigkeit (VS),
∘ einen Modus des Haltens der Neigung (FPA),
∘ einen Modus des Einnehmens der Höhe (ALT*),
∘ einen Modus der Beibehaltung der Höhe (ALT),
∘ einen Modus des Steigflugs nach dem Start oder des Durchstartens (SRS),
∘ einen Modus des Steigflugs mit konstantem Schub oder der Beibehaltung der Geschwindigkeit (OP CLB),
∘ einen Modus des Sinkflugs mit konstantem Schub oder der Beibehaltung der Geschwindigkeit (OP DES),
∘ einen Modus der Verfolgung eines vertikalen Profils im Steigflug (CLB),
∘ einen Modus der Verfolgung eines vertikalen Profils im Sinkflug (DES),
∘ einen Modus der vertikalen Verfolgung eines Profils zur Vermeidung von Kollisionen in der Luft (TCAS),
∘ einen Modus der vertikalen Erfassung eines Anflugleitstrahls (G/S*),
∘ einen Modus der vertikalen Verfolgung des Anflugleitstrahls (G/S),
∘ einen Modus der vertikalen Erfassung eines virtuellen Anflugleitstrahls des Navigationssystems (F-G/S*),
∘ einen Modus der vertikalen Verfolgung eines virtuellen Anflugleitstrahls des Navigationssystems (F-G/S);
- folgende Führungsmodi der Schubregelung:
∘ einen Modus der Beibehaltung der Geschwindigkeit (SPEED),
∘ einen Modus der Beibehaltung der Machzahl (MACH),
∘ einen Modus der Beibehaltung des Schubes (THR).

8. Verfahren nach einem der Ansprüche 1 bis 7,
**dadurch gekennzeichnet, dass** es sich bei den Anflugkategorien, klassifiziert nach einer Entscheidungshöhe und einer Landebahnsicht, um folgende handeln kann:
- eine erste Anflugkategorie (CAT I), für welche die Entscheidungshöhe größer oder gleich 200 Fuß ist und für welche die Landebahnsicht größer oder gleich 2400 Fuß ist,
- eine zweite Anflugkategorie (CAT II), für welche die Entscheidungshöhe größer oder gleich 100 Fuß und streng kleiner als 200 Fuß ist und für welche die Landebahnsicht größer oder gleich 1000 Fuß ist,
- eine dritte Anflugkategorie (CAT III A), für welche die Entscheidungshöhe streng kleiner als 100 Fuß ist und für welche die Landebahnsicht größer oder gleich 700 Fuß ist,
- eine vierte Anflugkategorie (CAT III B), für welche die Entscheidungshöhe größer oder gleich null und streng kleiner als 50 Fuß ist und für welche die Landebahnsicht größer oder gleich 250 Fuß und streng kleiner als 700 Fuß ist,
- eine fünfte Anflugkategorie (CAT III C), für welche die Entscheidungshöhe und die Landebahnsicht null sind.

9. Verfahren nach einem der Ansprüche 1 bis 6,
**dadurch gekennzeichnet, dass** die Informationsquellen (4) drei Luftgeschwindigkeits- und Luftdrucksensoren (41) und einen Geschwindigkeitsschätzer (52) umfassen, wobei die erste Menge alle Führungsmodi und alle Anflugkategorien umfasst.

10. Verfahren nach einem der Ansprüche 7 oder 8,
**dadurch gekennzeichnet, dass** in dem Fall, wenn im Überwachungsschritt (E1) der Verlust eines Luftgeschwindigkeits- und Luftdrucksensors (41) erkannt wird, die im ersten Bestimmungsschritt (E2) bestimmte zweite Menge der ersten Menge entspricht.

11. Verfahren nach einem der Ansprüche 7 bis 9,
**dadurch gekennzeichnet, dass**, wenn die Informationsquellen (4) drei Luftgeschwindigkeits- und Luftdrucksensoren (41) und einen Geschwindigkeitsschätzer (52) umfassen, in dem Fall, wenn im Überwachungsschritt (E1) der Verlust von zwei Luftgeschwindigkeits- und Luftdrucksensoren (41) erkannt wird, die im ersten Bestimmungsschritt (E2) bestimmte zweite Menge alle Führungsmodi der ersten Menge und die erste Anflugkategorie (CAT I) umfasst.

12. Verfahren nach einem der Ansprüche 7 bis 10,
**dadurch gekennzeichnet, dass**, wenn die Informationsquellen (4) drei Luftgeschwindigkeits- und Luftdrucksensoren (41) und einen Geschwindigkeitsschätzer (52) umfassen, in dem Fall, wenn der Verlust der drei Luftgeschwindigkeits- und Luftdrucksensoren (41) erkannt wird, die im ersten Bestimmungsschritt (E2) bestimmte zweite Menge wenigstens umfasst:
- den Steuerkurs-Modus (HDG),
- den Modus "Kurs über Grund" (TRK),
- den Modus der seitlichen Erfassung eines Anflugleitstrahls (LOC*),
- den Modus der seitlichen Verfolgung eines Anflugleitstrahls (LOC),
- den Modus des Haltens der Vertikalgeschwindigkeit (VS),
- den Modus des Haltens der Neigung (FPA),
- den Modus des Einnehmens der Höhe (ALT*),
- den Modus der Beibehaltung der Höhe (ALT),
- den Modus des Steigflugs nach dem Start oder des Durchstartens (SRS),
- den Modus des Steigflugs mit konstantem Schub oder der Beibehaltung der Geschwindigkeit (OP CLB),
- den Modus des Sinkflugs mit konstantem Schub oder der Beibehaltung der Geschwindigkeit (OP DES),
- den Modus der vertikalen Erfassung eines Anflugleitstrahls (G/S*),
- den Modus der vertikalen Verfolgung des Anflugleitstrahls (G/S),
- alle Führungsmodi der Schubregelung (SPEED, MACH, THR),
- die erste Anflugkategorie (CAT I).

13. Verfahren nach einem der Ansprüche 7 bis 11,
**dadurch gekennzeichnet, dass**, wenn die Informationsquellen (4) drei Luftgeschwindigkeits- und Luftdrucksensoren (41) und einen Geschwindigkeitsschätzer (52) umfassen, in dem Fall, wenn der Verlust der drei Luftgeschwindigkeits- und Luftdrucksensoren (41) und des Geschwindigkeitsschätzers (52) erkannt wird, die im ersten Bestimmungsschritt (E2) bestimmte zweite Menge wenigstens umfasst:
- den Steuerkurs-Modus (HDG),
- den Modus "Kurs über Grund" (TRK),
- den Modus des Haltens der Vertikalgeschwindigkeit (VS),
- den Modus des Haltens der Neigung (FPA),
- den Modus der Beibehaltung des Schubes (THR).

14. Automatisches Pilotenassistenzsystem eines Luftfahrzeugs, welches ermöglicht, die Verfügbarkeit wenigstens eines Autopiloten (2) und/oder eines Schubreglers (3) sicherzustellen, und welches dazu eingerichtet ist, in Abhängigkeit von einer Geschwindigkeitsinformation des Luftfahrzeugs gesteuert zu werden, wobei der Autopilot (2) einem automatischen Flugsteuerungssystem und/oder einem Flight Director entspricht, wobei die Geschwindigkeitsinformation des Luftfahrzeugs anhand einer oder mehrerer Informationsquellen (4) bestimmt wird, wobei der Autopilot (2) und/oder der Schubregler (3) dafür ausgelegt sind, gemäß einem ersten aktuellen Führungsmodus und einer Anflugkategorie zu arbeiten, die von einer Crew des Luftfahrzeugs (AC) ausgewählt werden und in einer ersten Menge von auswählbaren Führungsmodi und von auswählbaren Anflugkategorien enthalten sind,
wobei das System ein Überwachungsmodul (5) umfasst, das dafür ausgelegt ist, den Verlust einer oder mehrerer der einen oder mehreren Informationsquellen (4), die es ermöglichen, die Geschwindigkeitsinformation des Luftfahrzeugs zu bestimmen, erkennen zu können,
**dadurch gekennzeichnet, dass** es umfasst:
- ein Bestimmungsmodul (6), das dafür ausgelegt ist, eine vorbestimmte zweite Menge von auswählbaren Führungsmodi und von auswählbaren Anflugkategorien in Abhängigkeit von der oder den Informationsquellen (4), deren Verlust von dem Überwachungsmodul (5) erkannt worden ist, zu wählen, wobei die zweite Menge eine Untermenge der ersten Menge ist,
- ein erstes Benutzungsmodul (7), das dafür ausgelegt ist, den Autopiloten (2) und/oder den Schubregler (3) gemäß einem zweiten aktuellen Führungsmodus und einer Anflugkategorie, die in der zweiten Menge enthalten sind, arbeiten zu lassen;
wobei das Bestimmungsmodul (6) und das erste Benutzungsmodul (7) im Falle der Erkennung eines Verlustes wenigstens einer Informationsquelle (4) eingesetzt werden.

15. Luftfahrzeug, **dadurch gekennzeichnet, dass** es ein Pilotenassistenzsystem (1), wie es in Anspruch 14 angegeben ist, aufweist.

## Claims

1. Automatic method for aiding in the piloting of an aircraft, making it possible to ensure the availability of at least an automatic pilot (2) and/or a thrust regulation device (3) which can be controlled as a function of an item of aircraft speed information, the automatic pilot (2) corresponding to an automatic piloting system and/or a flight director, the aircraft speed information item being determined from one more sources of information (4), the automatic pilot (2) and/or the thrust regulation device (3) being configured to operate according to a first current guidance mode and an approach capability selected by a pilot of the aircraft (AC) included in a first set of selectable guidance modes and of selectable approach capabilities,
the method comprising a surveillance step (E1), implemented by a surveillance module (5), consisting in being able to detect the loss of one or more of said one or more sources of information (4) making it possible to determine the item of aircraft speed information;
**characterized in that** in case of detection of a loss of at least one information source (4), the method comprises the following steps:
- a first determination step (E2), implemented by a determination module (6), consisting in choosing a second predetermined set of selectable guidance modes and of selectable approach capabilities as a function of the information source or sources (4) whose loss was detected in the surveillance step (E1), the second set being a subset of the first set;
- a first step (E3) of use, implemented by a using module (7), consisting in making the automatic pilot (2) and/or the thrust regulation device (3) operate according to a second current guidance mode and an approach capability forming part of the second set.

2. Method according to Claim 1,
**characterized in that** the first set also comprises a first state machine configured to manage transitions to switch from one guidance mode out of the guidance modes of the first set to another guidance mode out of the guidance modes of the first set,
the first determination step (E2) also consisting in determining a second state machine configured to manage transitions to switch from one guidance mode out of the guidance modes of the second set to another guidance mode out of the guidance modes of the second set.

3. Method according to either one of Claims 1 and 2, **characterized in that**:
- when the first current guidance mode forms part both of the first set and of the second set, there is no change of guidance mode;
- when the first current guidance mode does not form part of the second set, there is a change of guidance mode to a predetermined guidance mode, forming part of the second set.

4. Method according to any one of Claims 1 to 3, **characterized in that**, after the detection of a loss of at least one source of information (4), the surveillance step (E1) continues to be implemented by the surveillance module (5),
- in case of detection of the end of loss of the source or sources of information (4) in the surveillance step (E1), the surveillance step (E1) is followed:
o by a second step (E4) of use, implemented by the using module (7), consisting in making the automatic pilot (2) and/or the thrust regulation device (3) operate according to a current guidance mode and an approach capability forming part of the first set,
- in case of detection of the loss of at least one other source of information in the surveillance step (E1), the surveillance step (E1) is followed:
o by a second determination step (E5), implemented by the determination module (6), consisting in modifying the second set of selectable guidance modes and of selectable approach capabilities as a function of the source or sources of information (4) whose loss was detected in the surveillance step (E1),
∘ a third step (E6) of use, implemented by the using module (7), consisting in making the automatic pilot (2) and/or the thrust regulation device (3) operate according to a third current guidance mode and an approach capability included in the modified second set.

5. Method according to any one of Claims 1 to 4, **characterized in that** the sources of information (4) surveyed in the surveillance step (E1) comprise at least one anemo-barometric sensor (41) and at least one speed estimator (52).

6. Method according to any one of Claims 1 to 5, **characterized in that** the method comprises a backup step (E7), implemented by a backup module (8), consisting in determining an altitude and a vertical speed by using a source of auxiliary information (42) comprising a geolocation device (421) or an inertial unit (422) associated with a geolocation device (421), the backup step (E7) being implemented if the loss of source of information consisting in the loss of the or all of the anemo-barometric sensors (41) and of the speed estimator (52) is detected in the surveillance step (E1).

7. Method according to any one of Claims 1 to 6, **characterized in that** the guidance modes are included among:
- the following lateral guidance modes:
∘ a heading tracking mode (HDG),
∘ a route tracking mode (TRK),
∘ a flight plan-based navigation mode (NAV),
∘ an approach beam lateral capture mode (LOC*),
∘ a localizer approach beam lateral tracking mode (LOC),
∘ a virtual approach beam lateral capture mode of a navigation system of the aircraft (F-LOC*),
∘ a virtual approach beam lateral tracking mode of the navigation system (F-LOC);
- the following vertical guidance modes:
∘ a vertical speed holding mode (VS),
∘ a flight path angle holding mode (FPA),
∘ an altitude capture mode (ALT*),
∘ an altitude maintaining mode (ALT),
∘ a post-take-off climb or go-around mode (SRS),
∘ a climb with constant thrust or speed maintaining mode (OP CLB),
∘ a descent with constant thrust or speed maintaining mode (OP DES),
∘ a climbing vertical profile tracking mode (CLB),
∘ a descending vertical profile tracking mode (DES),
∘ an air collision avoidance profile vertical tracking mode (TCAS),
∘ an approach beam vertical capture mode (G/S*),
∘an approach beam vertical tracking mode (G/S),
∘ a virtual approach beam vertical capture mode of the navigation system (F-G/S*),
∘ a virtual approach beam vertical tracking mode of the navigation system (F-G/S);
- the following thrust regulation guidance modes:
∘ a speed maintaining mode (SPEED),
∘ a Mach number maintaining mode (MACH),
∘ a thrust maintaining mode (THR).

8. Method according to any one of Claims 1 to 7, **characterized in that** the approach capabilities classified according to a decision height and a runway visual range are included among:
- a first approach capability (CAT I) for which the decision height is greater than or equal to 200 feet and for which the runway visual range is greater than or equal to 2400 feet,
- a second approach capability (CAT II) for which the decision height is greater than or equal to 100 feet and strictly less than 200 feet and for which the runway visual range is greater than or equal to 1000 feet,
- a third approach capability (CAT III A) for which the decision height is strictly less than 100 feet and for which the runway visual range is greater than or equal to 700 feet,
- a fourth approach capability (CAT III B) for which the decision height is greater than or equal to zero and strictly less than 50 feet and for which the runway visual range is greater than or equal to 250 feet and strictly less than 700 feet,
- a fifth approach capability (CAT III C) for which the decision height and the runway visual range are nil.

9. Method according to any one of Claims 1 to 6, **characterized in that** the sources of information (4) comprise three anemo-barometric sensors (41) and a speed estimator (52), the first set comprising all the guidance modes and all the approach capabilities.

10. Method according to either one of Claims 7 and 8, **characterized in that**, in the case where the loss of an anemo-barometric sensor (41) is detected in the surveillance step (E1), the second set determined in the first determination step (E2) corresponds to the first set.

11. Method according to any one of Claims 7 to 9, **characterized in that**, the sources of information (4) comprising three anemo-barometric sensors (41) and a speed estimator (52), in the case where the loss of two anemo-barometric sensors (41) is detected in the surveillance step (E1), the second set determined in the first determination step (E2) comprises all the guidance modes of the first set and the first approach capability (CAT I).

12. Method according to any one of Claims 7 to 10, **characterized in that**, the sources of information (4) comprising three anemo-barometric sensors (41) and a speed estimator (52), in the case where the loss of the three anemo-barometric sensors (41) is detected, the second set determined in the first determination step (E2) comprises at least:
- the heading tracking mode (HDG),
- the route tracking mode (TRK),
- the approach beam lateral capture mode (LOC*),
- the approach beam lateral tracking mode (LOC),
- the vertical speed holding mode (VS),
- the flight path angle holding mode (FPA),
- the altitude capture mode (ALT*),
- the altitude maintaining mode (ALT),
- the post-take-off climb or go-around mode (SRS),
- the climb with constant thrust or speed maintaining mode (OP CLB),
- the descent with constant thrust or speed maintaining mode (OP DES),
- the approach beam vertical capture mode (G/S*),
- the approach beam vertical tracking mode (G/S),
- all the thrust regulation guidance modes (SPEED, MACH, THR),
- the first approach capability (CAT I).

13. Method according to any one of Claims 7 to 11, **characterized in that**, the sources of information (4) comprising three anemo-barometric sensors (41) and a speed estimator (52), in the case where the loss of the three anemo-barometric sensors (41) and of the speed estimator (52) is detected, the second set determined in the first determination step (E2) comprises at least:
- the heading tracking mode (HDG),
- the route tracking mode (TRK),
- the vertical speed holding mode (VS),
- the flight path angle holding mode (FPA),
- the thrust maintaining mode (THR).

14. Automatic system for aiding in the piloting of an aircraft, making it possible to ensure the availability of at least an automatic pilot (2) and/or a thrust regulation device (3) which can be controlled as a function of an item of aircraft speed information, the automatic pilot (2) corresponding to an automatic piloting system and/or a flight director, the aircraft speed information item being determined from one or more sources of information (4), the automatic pilot (2) and/or the thrust regulation device (3) being configured to operate according to a first current guidance mode and an approach capability selected by a crew of the aircraft (AC) included in a first set of selectable guidance modes and of selectable approach capabilities,
the system comprising a surveillance module (5) configured to be able to detect the loss of one or more of said one or more sources of information (4) making it possible to determine the speed of the aircraft, **characterized in that** it comprises:
- a determination module (6) configured to choose a second predetermined set of selectable guidance modes and of selectable approach capabilities as a function of the information source or sources (4) whose loss was detected by the surveillance module (5), the second set being a subset of the first set,
- a first using module (7) configured to make the automatic pilot (2) and/or the thrust regulation device (3) operate according to a second current guidance mode and an approach capability included in the second set;
the determination module (6) and the first using module (7) being implemented in case of the detection of a loss of at least one source of information (4).

15. Aircraft, **characterized in that** it comprises a piloting aid system (1), such as that specified under Claim 14.
